# EUROPEAN PATENT SPECIFICATION

(11) **EP 3 035 492 B1**
(45) Date of publication and mention of the grant of the patent: **15.03.2023**
(21) Application number: 13891467.6
(22) Date of filing: 14.08.2013
(51) Int. Cl.: H02K 1/16, H02K 3/28, H02K 17/08

(54) **ELECTRIC MACHINE WINDING WITH CENTRAL COIL**
WICKLUNG EINER ELEKTRISCHEN MASCHINE MIT ZENTRALER SPULE
ENROULEMENT DE MACHINE ÉLECTRIQUE À BOBINE CENTRALE

(43) Date of publication of application: 22.06.2016
(73) Proprietor: Geertsen, Bent, 6650 Broerup (DK)
(72) Inventor: Geertsen, Bent, 6650 Broerup (DK)
(86) International application number: PCT/ES2013/000200
(87) International publication number: WO 2015/022439

(56) References cited:
- DE-A1- 3 704 226
- GB-A- 675 919
- GB-A- 2 020 914
- GB-A- 2 156 167
- GB-A- 2 199 995
- GB-A- 2 279 818
- JP-A- S5 826 555
- JP-A- 2003 143 821
- JP-A- 2005 348 487
- US-A- 604 055
- US-A- 2 993 136
- US-A- 3 942 055
- US-A- 4 982 129
- US-A- 5 866 964

## Description

Electric machine winding having center coil in the field center in the pair of poles and auxiliary coils in the field of each one of the two poles in the pair of poles in the stator. The rotor of the electric machine is circular due to the rotation in the machine, its area and shape of the core is determined. The stator must ensure adequate field strength in the right places with the help of the winding. The winding provides the required power in the right place by means of one or more coils. The coil power depends on the number of turns in the coil. When the winding consists of several coils in each pole pair in the stator, the power is distributed to the coils using their corresponding area in the rotor core area elevated to the square as the basis for the correct distribution of the load in the machine and the maximum use of the rotor and stator. Each coil in an electrical machine transforms electricity from the stator to the rotor as a transformer. The power of the electric machine is the sum of the powers of the coils and dependent on elevate to the square its core area in the rotor, which is the diameter of the rotor multiplied by the width of the rotor.

The power of an electrical machine, of a transformer and of a coil depends on its core area elevated to the square. Power = B x A². Power = W (watt) or VA (volt ampere). B = the flow. A = the core area.

According to the present invention, make electrical machine winding with center coil in the field center in the pair of the poles and auxiliary coils in the field of each of the two poles in the pair of poles in the stator.

In an electrical machine with a coil in each of the two poles of the pair of poles in the stator, the two coils are replaced by one center coil in the field center of each pair poles in the stator.

According to the present invention, make larger the central slot in the pair poles in the stator and increase the number of turns in the center coil in the field center in the pair of poles and adjusting the turns in the auxiliary coils.

In the universal motor and the DC motor with a coil in each one of the two poles in the pair of poles in the stator to join the two coils on a single center coil in the center of the stator field. The 2 shorted coils separated in 4 slots in the rotor, join in 2 opposing radial slots in the rotor.

The power of electric machines of different sizes are determined on the basis of its core area in the rotor elevated to the square, comprising the rotor diameter multiplied by the width of the rotor. Make the power of a coil in an electrical machine with the function to elevate to the square its corresponding area in the rotor core by setting the number of turns in the coil proportional to the area, which is the effective width of the rotor multiplied by the chord length in the rotor between the two lines from the rotor center to the two centers of the coil in the stator.

The distance between a slot in the stator and the outer surface of y the stator depends on function of the square root of the power of the coil in this slot.

Multi polar electrical machines can be winded with center coil with or without auxiliary coils in each pair of poles in the stator. Multi-phase electric machines can be winded on the same principle as in the invention, by winding as single-phase electric machine for each phase.

### The existing electrical machines.

The electrical machine has a winding with a primary coil with or without auxiliary coils in each one of the two poles in each pair of poles in the stator. The volume of the rotor is used as a basis for calculating the power of an electric machine. When there are auxiliary coils in an electrical machine, there is no known effective method of calculating the distribution of the power and the number of turns between the coils providing the appropriate loading of the rotor core and stator core. When a coil has many turns, it absorbs more energy. This causes heat accumulation, further temperature rise that may cause possible burning of insulation and short-circuit in the coil. The power factor (cos ϕ) and efficiency is also reduced. This heating is a waste of energy. Is almost always the smaller coil which burns out due to too many turns, while the coil is the more enclosed.

The universal motor and DC motor haves a coil in each one of the two poles of the pole pair in the stator. There are 2 short-circuited coils separated in 4 slots in the rotor.

General Electric Company displays in the US patent 3942055 the 4 largest slots for the primary coils with the same number of turns in the coil. The middle large slots are used for both the auxiliary coils of the main winding and the start winding. The smaller slots are for the start winding. The two outer coils in one pole have therefore the same number of turns.

JP S58 26555 A discloses a stator of a small single phase inductive motor having two poles, and more particularly it relates to an improved shape and effective utilization of the stator core of a capacitor run induktion motor requiring only in one direktion rotation.

The aim of the present invention is to overcome the above mentioned deficiens and a solution to the above mentioned problems is provided by means of the present invention as defined in independent claim 1.

### Improvements.

By distributing the powers of the coils using its corresponding core area in the rotor elevated to the square as base, the apparently power effect (VA) (volt ampere) is improved approximately 25 % in small asynchronous motors with the current design of the rotor and stator. The power factor (cos ϕ) and efficiency improved significantly. By adapting the design of the stator and rotor efficiency can be further improved. Generates less heat and there is less possibility to burn out the winding. The need for cooling is also reduced. Copper consumption is nearly the same as the current, but with a smaller cross section.

By making larger the center slot in the center of the field in the pole pair in the stator and increase the number of turns in the center coil in the field and adjusting the turns in the auxiliary coils may reduce the number of slots and auxiliary coils in the stator.

When universal motor and DC motor with a coil in each one of the two poles in the pole pair in the stator united in a single central coil in the center of the field and the 2 short-circuited coils separate in 4 slots in the rotor joined in 2 opposing radial slots in the rotor increases the motor efficiency.

In the 4 primary coils in US patent 3942055 the 2 outer primary coils are replaced with a central coil and the 2 inner primary coils changed to auxiliary coils, and the motor efficiency is improved

When the stator is outside the rotor, the outer shape is made by the distance between a slot in the stator and the outer surface of the stator depends on the square root of the power in the coil in the slot. The stator design in patent GB 2199995 A has a different basis for the design of the outer surface of the stator of single phase induction motors and does not give the same result.

The patent DE 3704226A1 shows a rectangular stator with less core area in the stator for the 2 outer primary coils than for the 2 inner primary coils. The 2 outer primary coils have more power and should have more core area than the 2 primary coils according to this invention.

### The invention is explained with the following figures:

The start winding is not included. This is wounded by the same rules.
**Fig. 1** shows the winding in an existing single phase asynchronous motor with a stator (St) with 24 slots. Ro = rotor. St = stator. B12 = primary coil. B10 = auxiliary coil. B8 = auxiliary coil. B6 = auxiliary coil. B4 = auxiliary coil.
**Fig. 2** shows the same motor as **Fig. 1** with winding with center coil (BC) in the center of the field in the pole pair and auxiliary coils (B) in the field of each one of the two poles of the pair of poles in the stator. B11 = auxiliary coil. B9 = auxiliary coil. B7 = auxiliary coil.
**Fig. 3** shows the winding for a stator with two poles, 20 slots with center coil (BC) in the center of the field in the pole pair and auxiliary coils (B) in each pair of poles in the stator (St). Auxiliary coils (B) are numbered according to the number of slots that hey cross. Its corresponding angle (A) and sine A in the rotor (Ro) and the distance (H) are numbered with the same number. H = the distance between a slot in the stator and the outer surface of the stator (St). Signs used are shown in the following table:

| **Coils** | **Angles** | **Sine A** | **Distance H** |
|---|---|---|---|
| **Central coil BC** | **AC** | **SC** | **HC** |
| **Auxiliary Coil B9** | **A9** | **S9** | **H9** |
| **Auxiliary Coil B7** | **A7** | **S7** | **H7** |
| **Auxiliary Coil B5** | **A5** | **S5** | **H5** |
| **Auxiliary Coil B3** | **A3** | **S3** | **H3** |

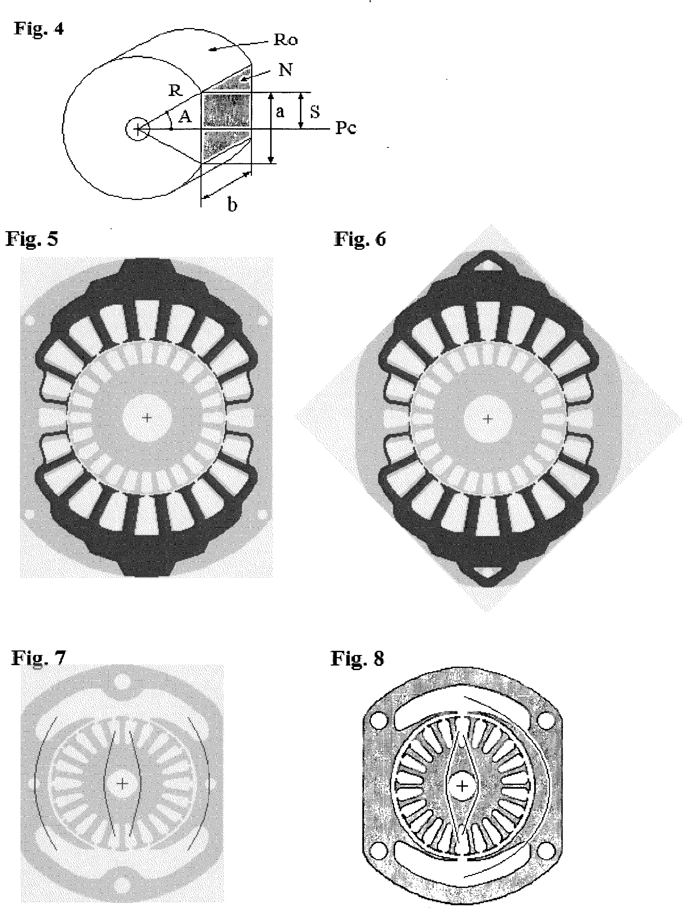

**Fig. 4** shows the core area (N) in the rotor (Ro) corresponding to a coil (B) in the stator (St). The area of the core (N) is shown in gray color. Ro = rotor core. b = width of the rotor. R = radius of the rotor (Ro). N = area of the rotor core that corresponds to the coil (B) in the stator (St). a = length of the chord in the rotor (Ro) = height of the core (N). Pc = the center line of the pole. A = the angle between the centerline of the pole (Pc) and the line (R) from the center of the rotor (Ro) to one of the two centers of the coil (B) in the stator. S = sine A
**Fig. 5** shows the shape of the stator s with winding with center coil in field center and auxiliary coils in the pole pair. The shape of the calculated stator is shown with black color.
**Fig. 6** shows the stator with 2 holes for mounting. The shape of the calculated stator is shown with black color.
**Fig. 7** shows the universal motor and the DC motor with the current winding. The two coils in the stator are shown with black colored line. The 2 short-circuited coils in 4 slots in the rotor are shown with black colored line.
**Fig. 8** shows the universal motor and DC motor width single center coil in the center of the field in the stator. The single center coil is shown with the black colored line. The 2 short-circuited coils together in the same two opposing radial slots in the rotor are indicated by black line.

### Detailed description of the invention.

Use a single phase asynchronous motor in a hermetically sealed refrigeration compressor with 20 slots in the stator (St) as an example. Start winding is not included. This is wounded by the same rules.

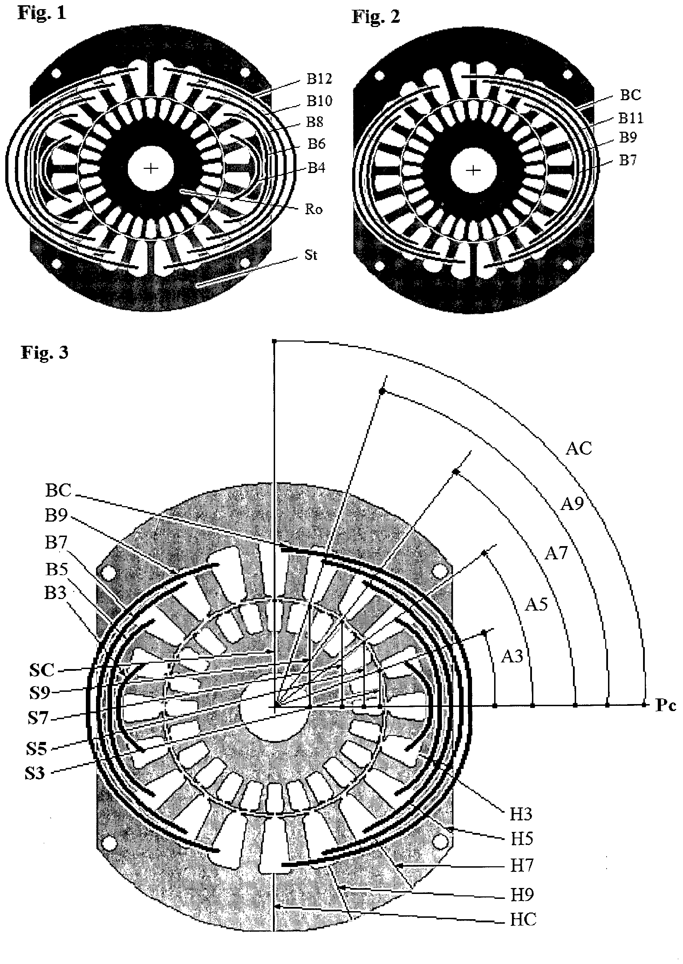

Refer to **Fig. 3** and **Fig. 4****.** The center coil (BC) in the center of the pair of poles in the stator (St) has the diameter of the rotor (Ro) times the width (b) of the rotor (Ro) as core area (NC). Auxiliary coils (B) in the field in each one of the two poles in the pair of poles in the stator (St) are numbered according to the number of slots they cross. Their corresponding angle (A) and sine A in the rotor (Ro) and the distance (H) are numbered with the same number. The coils (B) in the motor winding are connected in series and therefore have the same amperage. The width of the core area (b) is the same as the effective width (b) of the rotor (Ro). The angle (A) is between the center line (Pc) of the pole and the line (R) extending from the center of the rotor (Ro) to one of the two centers of the coil (B) in the stator (St).

The height (a) of the core of a coil (B) is the same as the chord (a) in the rotor (Ro) between the lines that extends from the center of the rotor (Ro) to the two centers of the coil (B) in the stator (St).

In order to achieve the same flow loading the numbers of turns in the coil (B) have to be proportional to the area of the core (N) corresponding in the rotor (Ro). The power of the coil (B) depends on its corresponding core area (N) in the rotor (Ro) elevated to the square. The width (b) of the cores (N) is equal and the number of turns of the coil (B) will be proportional to its height (a) of the core (N) in the rotor (Ro). The power in the coil (B) is dependent on the height (a) of the core (N) in the rotor (Ro) elevated to the square. The chord length (a) in the rotor (Ro) is the radius (R) of the rotor (Ro) 2 times sine A. The radius (R) of the rotor (Ro) is constant.

Sine A can be used as the distribution factor of the number of turns in each coil (B) in the motor winding and applies to all electrical machines of all sizes with auxiliary coils in the winding. Sine² A is used as the allocation factor to the proportion of the power of the coil (B) and applies to all electric machines of all sizes with auxiliary coils in the winding.

The sum of the powers of the coils (B) is the motor power. The motor depends as the center coil (BC) in the center of the field in the pole pair by function to elevate to the square its core area (NC) in the rotor, comprising the rotor diameter multiplied by the width (b) of the rotor (Ro).

For a stator (St) with two poles, 20 slots, winding with center coil (BC) in the center of the field in the pole pair and auxiliary coils (B) in the field of each one of the two poles of the pair of poles the distribution of the number of turns between the coils (B) would be as shown in the following table:

| **Coils** | **Angles A** | | **Factor** | | | **Coils** |
|---|---|---|---|---|---|---|
| **Signs** | **Signs** | **Grades** | **Sine A** | **Distribution** | **Sum** | **Number of turns** |
| BC | AC | 90 | 1 | 1 x 1 | 1 | 1 x Fs |
| B9 | A9 | 72 | 0,95 | 2 x 0.95 | 1.9 | 0.95 x Fs |
| B7 | A7 | 54 | 0,81 | 2 x 0.81 | 1.62 | 0.81 x Fs |
| B5 | A5 | 36 | 0,59 | 2 x 0.59 | 1.18 | 0.59 x Fs |
| B3 | A3 | 18 | 0,31 | 2 x 0.31 | 0.62 | 0.31 x Fs |
| Sum | | | | | 6.32 | Sum of motor |

| | | | | | | |
|---|---|---|---|---|---|---|
| Fs = Sum of motor/6.32 | | | | | | |

When the distance between a slot and the outer surface of the stator is provided, the other distances (H) must adapt to its factor sine A. Signs refer to **Fig. 3****.** For a stator (St) with two poles, 20 slots, with winding with center coil (BC) and auxiliary coils (B) the distances (H) would be as shown in the following table:

| **Coils** | **Angles A** | | **Factor** | **Stator** |
|---|---|---|---|---|
| **Signs** | **Signs** | **Grades** | **Sine A** | **Distance H** |
| BC | AC | 90 | 1 | HC |
| B9 | A9 | 72 | 0.95 | H9 |
| B7 | A7 | 54 | 0.81 | H7 |
| B5 | A5 | 36 | 0.59 | H5 |
| B3 | A3 | 18 | 0.31 | H3 |

The resulting shape of the stator (St) is shown in **Fig. 5****,** and with two mounting holes in **Fig. 6** with black color. In regard to installation in the machine, some distance (H) from the slots to the outer surface of the stator (St) is greater than necessary and the number of turns in the coil (B) is adjusted so that they get the right power with respect to the rotor (Ro).

An existing single-phase asynchronous motor with one primary coil and 4 auxiliary coils in each one of the two poles in the pair of poles in the stator shown in **Fig. 1** was replaced with a center coil in the center of the field and 3 auxiliary coils in each one of the two poles in the pole pair in the stator as shown in **Fig. 2** with an energy saving of 22.5% and a saving of 16.5% copper.

## Claims

1. An electric machine comprising:
a stator (St) and a rotor (Ro) located within the stator (St),
the stator (St) comprising a plurality of circumferentially distributed stator teeth,
wherein the stator teeth are projecting radially inward from a stator back yoke,
the stator (St) further comprising a plurality of stator slots arranged between circumferentially adjacent stator teeth,
the electric machine further comprising:
a stator winding with one center coil (BC) located in two diametrically opposing stator slots aligned on one diameter of the stator (St),
wherein a center line (Pc) is perpendicular to the said diameter and is passing through the center of the rotor, and
the stator winding further comprising a first plurality of auxiliary coils (B3,B5,B7,B9.B11) located in slots that are on the same side of said diameter,
wherein each of the first plurality auxiliary coils (B3,B5,B7,B9.B11) is wound in two slots which are symmetrical with respect to the center line (Pc), and
a second plurality of auxiliary coils (B3,B537,B9.B11) located in slots that are on the other side of said diameter,
wherein each of the second plurality of auxiliary coils (B3,B5,B7,B9.B11) is wound in two slots which are symmetrical with respect to the centerline (Pc),
wherein each stator slot comprises a middle line passing through the middle of the stator slot and the center of the rotor
**characterized in that**
the number of turns of each coil (BC,B3,B5,B7,B9.B11) is proportional to the length of the chord joining the points where the middle lines of the two slots containing the coil (BC,B3,B5,B7,B9.B11) intersect with the outer surface of the rotor (Ro),
for each coil (BC,B3,B5,B7,B9.B11) the radial distance (H) between the bottom of each of the two slots containing the coil (BC,B3,B5,B7,B9.B11) and the outer surface of the stator back yoke is proportional to the length of chord joining the points where the middle lines of the two slots containing the coil (BC,B3,B5,B7,B9,B11) intersect with the outer surface of the rotor (Ro).

## Patentansprüche

1. Elektrogerät, umfassend:
einen Stator (St) und einen Rotor (Ro) im Stator (St),
wobei der Stator (St) eine Vielzahl von umlaufend verteilten Statorzähnen umfasst,
wobei die Statorzähne von einem Statorrückseitenjoch radial nach innen vorstehen,
wobei der Stator (St) ferner eine Vielzahl von Statornuten umfasst, die zwischen in Umfangsrichtung benachbarten Statorzähnen angeordnet sind,
wobei das Elektrogerät ferner umfasst:
eine Statorwicklung mit einer mittleren Spule (BC), die sich in zwei diametral entgegengesetzten Statornuten befindet, die auf einem Durchmesser des Stators (St) ausgerichtet sind,
wobei eine Mittellinie (Pc) senkrecht zu dem Durchmesser ist und durch die Mitte des Rotors verläuft, und
wobei die Statorwicklung ferner eine erste Vielzahl von Hilfsspulen (B3, B5, B7, B9, B11) umfasst, die sich in Nuten befinden, die auf derselben Seite des Durchmessers liegen,
wobei jede der ersten Vielzahl von Hilfsspulen (B3, B5, B7, B9, B11) in zwei Nuten gewickelt ist, die in Bezug auf die Mittellinie (Pc) symmetrisch sind, und
eine zweite Vielzahl von Hilfsspulen (B3, B5, B7, B9, B11), die sich in Nuten befinden, die auf der anderen Seite des Durchmessers liegen,
wobei jede der zweiten Vielzahl von Hilfsspulen (B3, B5, B7, B9, B11) in zwei Nuten gewickelt ist, die in Bezug auf die Mittellinie (Pc) symmetrisch sind,
wobei jede Statornut eine mittlere Linie umfasst, die durch die Mitte der Statornut und die Mitte des Rotors verläuft,
**dadurch gekennzeichnet, dass**
die Anzahl der Windungen jeder Spule (BC, B3, B5, B7, B9, B11) proportional zur Länge der Sehne ist, die Punkte verbindet, an denen die mittleren Linien der beiden Nuten, die die Spule (BC, B3, B5, B7, B9, B11) enthalten, sich mit der Außenoberfläche des Rotors (Ro) überschneiden,
für jede Spule (BC, B3, B5, B7, B9, B11) der radiale Abstand zwischen dem Boden jeder der beiden Nuten, die die Spule (BC, B3, B5, B7, B9, B11) enthalten, und der Außenoberfläche des Statorrückseitenjochs proportional zur Länge der Sehne ist, die die Punkte verbindet, an denen die mittleren Linien der zwei Nuten, die die Spule (BC, B3, B5, B7, B9, B11) enthalten, sich mit der Außenoberfläche des Rotors (Ro) überschneiden.

## Revendications

1. Machine électrique comprenant :
un stator (St) et un rotor (Ro) dans le stator (St),
le stator (St) comprenant une pluralité de dents de stator réparties circonférentiellement,
dans laquelle les dents de stator font saillie radialement vers l'intérieur à partir d'une culasse arrière de stator,
le stator (St) comprenant en outre une pluralité de fentes de stator agencées entre des dents de stator circonférentiellement adjacentes,
la machine électrique comprenant en outre :
un enroulement de stator avec une bobine centrale (BC) située dans deux fentes de stator diamétralement opposées alignées sur un diamètre du stator (St),
dans laquelle une ligne centrale (Pc) est perpendiculaire audit diamètre et traverse le centre du rotor, et
l'enroulement de stator comprenant en outre une première pluralité de bobines auxiliaires (B3, B5, B7, B9, B11) situées dans des fentes qui sont sur le même côté dudit diamètre,
dans laquelle chacune parmi la première pluralité bobines auxiliaires (B3,B5,B7,B9,B11) est enroulée dans deux fentes qui sont symétriques par rapport à la ligne centrale (Pc), et
une deuxième pluralité de bobines auxiliaires (B3, B5, B7, B9, R11) situées dans des fentes qui sont sur l'autre côté dudit diamètre,
dans laquelle chacune parmi la deuxième pluralité de bobines auxiliaires (B3, B5, B7, B9, B11)est enroulée dans deux fentes qui sont symétriques par rapport à la ligne médiane (Pc),
dans laquelle chaque fente de stator comprend une ligne médiane traversant le milieu de la fente de stator et le centre du rotor
**caractérisée en ce que**
le nombre de spires de chaque bobine (BC, B3, B5, B7, B9, B11) est proportionnel à la longueur de la corde joignant les points où les lignes médianes des deux fentes contenant la bobine (BC, B3, B5, B7, B9, B11) coupent la surface externe du rotor (Ro),
pour chaque bobine (BC,B3,BS,B7,B9,B11) la distance radiale entre le fond de chacune des deux fentes contenant la bobine (BC,B3,B5,B7,B9,B11) et la surface externe de la culasse arrière de stator est proportionnelle à la longueur de la corde joignant les points où les lignes médianes des deux fentes contenant la bobine (BC,B3,B5, B7,B9,B11) coupent la surface externe du rotor (Ro).
